# EUROPEAN PATENT SPECIFICATION

(11) **EP 2 411 211 B1**
(45) Date of publication and mention of the grant of the patent: **01.05.2013**
(21) Application number: 10710932.4
(22) Date of filing: 24.03.2010
(51) Int. Cl.: B32B 3/24, B32B 27/40, E04D 5/10, E04D 13/147, B32B 27/04, B32B 27/12

(54) **COVERING MATERIAL FOR WATER- OR WEATHER-PROOFING**
ABDECKMATERIAL ZUR ABDICHTUNG GEGENÜBER WASSER ODER WITTERUNGSEINFLÜSSEN
MATÉRIAU DE RECOUVREMENT POUR IMPERMEABILISATION À L'EAU OU RÉSISTANCE AUX ALÉAS CLIMATIQUES

(30) Priority: 24.03.2009 NL 2002660
(43) Date of publication of application: 01.02.2012
(73) Proprietor: Redeahold Apeldoom B.V., 8191 JP Wapenveld (NL)
(72) Inventor: WORTELBOER, Johannes, Petrus, NL-9465 TN Anderen (NL)
(74) Representative: Hutter, Jacobus Johannes
(86) International application number: PCT/NL2010/050151
(87) International publication number: WO 2010/110661

(56) References cited:
- WO-A1-2004/083555
- DE-A1- 19 523 834
- DE-A1- 19 842 032
- DE-U1- 20 316 077

## Description

### FIELD OF THE INVENTION

The present invention is in the field of covering materials, to provide weather- or waterproofing, particularly for transitions between different construction elements, more particularly for transitions between different parts in roofs.

### BACKGROUND OF THE INVENTION

It is known to use lead at the location of transitions in roof structures. There are such transitions in the connection of skylights, dormer windows or chimneys (lead flashings) with the actual roof covering, such as tile roof Because lead deteriorates, ruptures in course of time and requires a lot of effort to connect it fluently, the art has searched for lead-substituting covering materials that are durable and easy to manufacture. Besides, lead and the corrosion compounds resulting from exposure to climatic elements, lead to environmental burdens that are no longer acceptable.

Such a lead-substituting material is presented in EP 123 141. It discloses sealing material which is moldable into shape permanence and which includes an insert in the form of a metal wire netting. The insert is wholly embedded in the roof covering material which comprises two layers of thermoplastic nature, preferably of synthetic rubber. Similarly, W-90/05223 discloses bituminous coverings constituted by a reinforcement impregnated with a mixture of bitumen and thermo-elastomeric or thermoplastic compounds.

WO-2004/083555 seeks to improve covering materials for roofs in the metal framework. It proposes a covering material for roofs that comprises a metal layer that is gauze-shaped and is provided with apertures, as well as a layer of bituminous materials which is arranged at at least one side of the gauze and extends through the apertures. The bitumen is the sealing element that provides the covering material with a certain durability and sealing properties, preferably a thermoplastic polymer-modified bitumen. More particularly, the polymer bitumen is modified with a thermoplastic elastomer (TPE), especially SBS-modified or - in connection with its UV-resistance - SEBS-modified polymer bitumen.

The thermoplastic or elastomer-based roof covering materials taught in the art have good shape memory, and are highly elastic in nature at ambient temperatures. Nevertheless, these products still possess a tendency to plastic deformation, so the material liquefies or flows when stress is applied. Further, the assembly of reinforcement and thermoplastic must take place at energy-consuming elevated temperatures, typically at temperatures over 150 °C, usually at temperatures between 170 and 200 °C. This high temperature is necessary to provide a sealing compound with a viscosity which is sufficiently low to allow penetration and/or impregnation of the reinforcement.

Another disadvantage of commonly used thermoplastic products in general and of sheet-shaped and/or roll-shaped products in particular, is their tendency to flow and stick together when stored at temperatures above the average ambient temperatures and under its own weight. Especially during shipment in closed spaces like containers such behavior can be detrimental to the quality and applicability of such products.

Although the polymer-modified bituminous covering materials show tough yet plastic deformable properties desirable for roofing applications, there is still room for improvement, for instance in terms of impact strength. Not unimportantly, the manufacture of lead-substituting TPE-containing material involves energy-consuming high temperatures for the bitumen to liquefy. Additionally, it shows brittle and softening behavior at respective cold and hot weather conditions. This is a result of the rheological properties of the thermoplastic elastomers. Attempts have been reported in the art to shift the interval to lower temperatures or to higher, but it has been shown difficult to change the width of the interval. The problem has been addressed in US 2009/0056261, where a solution is provided by foaming the roofing membrane with so-called expanded microspheres comprising a thermoplastic polymer shell and a blowing agent entrapped therein. Such a solution, however, has several drawbacks like the use of highly flammable or toxic liquids, boiling at relatively low temperatures. Also, poor flexibility at low temperature is still observed.

### SUMMARY OF THE INVENTION

It is an objective of the present invention to provide an improved covering material suitable for roofs, especially to manufacture flashings (also lead substitution) and to provide water-proofing, and which eliminates the disadvantages described above in the known art. It is particularly an objective to provide covering materials which resist softening and flow at high temperatures, while maintaining elasticity at low temperatures, at and far below 0 °C. The inventor has found that such a material can be provided by using thermosetting polyurethane (PUR), preferably in connection with suitable extenders in order to provide cost efficiency.

The covering material for flashing applications (like e.g. lead substitution) according to the present invention is advantageously characterized by its improved thermal and mechanical properties, particularly in terms of impact strength in a wide temperature range. It prevents the covering material from softening and flowing at high temperatures, e.g. from sunlight exposure, and at the same time it provides the material with the desired flexibility at low temperature, e.g. 0 °C. In fact, even at - 50 °C a covering material thus prepared shows no brittle behavior. It maintains its flexibility over extended time and at continuous or repeated load. This property is especially advantageous when applied as a lead-substitute: these have to be put in the permanent shape by exerting intermittent forces (e.g. hammering), also and especially at low temperatures. Also, at higher temperatures, easily encountered under practical conditions at roof surfaces, it is important that the resistance to plastic deformation must be improved. Under these conditions, it can easily be expected that the assemblies of reinforcement and coverings applied in the art are separated, whereas the use of thermosetting polyurethane avoids the risk thereof.

In addition, the PUR-based covering material exhibits UV and oxidation resistance improved over its elastomer-base counterpart. Where the covering material is applied in roofing and water-proofing construction materials, in order to meet the demands on UV and oxidation resistance it is often deemed necessary to roll aggregates such as stone, grit, gravel and/or sand into the bituminous layer (called "dusting").Yet another advantage is that the polyurethane is colorless and thus renders it possible to manufacture covering materials colored throughout simply by adding colorants to the polyurethane composition before assembly. Such aesthetic appearance could not be realized using conventional coverings based on thermoplastic polymer-modified bitumen. It also renders the need for applying aggregate materials or dusting on top superfluous, thus simplifying the assembly and reducing (the risk of) fouling associated therewith.

Also, the manufacturing method of the covering material according to the present invention is straightforward in terms of time and temperature. Curing of the PUR is achieved at fast rates and already at temperatures below 50 °C, compared to the temperatures of 130 - 180 °C easily necessary when producing elastomer-containing covering materials, which have to be in the molten state during assembly with the reinforcement.

Thus far, curable polyurethane-modified bitumen compositions have been applied in US 4,795,760 for adhesive, sealant, foaming or coating purposes. The focus was on improving the thermoplastic ductility of the bitumen fraction, but retaining the thermoplastic nature. In US 4,795,760, single component polyurethane systems have been described where polyurethane is already present as a prepolymer. Conventional polyurethane is indeed known for its sealing or adhesive properties, as it is also taught in WO-02/28635. It is emphasized that the skilled artisan would not find an incentive in the art to apply polyurethane other than for sealing and in amounts associated therewith, let alone to replace the elastomers in traditional roofing materials. At the hot conditions involved in the manufacture of e.g. TPE-containing roof materials it would be impossible to cast the cured polyurethane.

### LIST OF FIGURES

Figure 1 illustrates part of a reinforced covering material according to the invention in a perspective view, various layers comprised in the covering material having been cut at various points;
Figures 2 and 3 illustrate a section of the reinforced covering material according to the invention on line II - II in figure 1;
Figure 4 shows a top view of a preferred gauze-shaped expanded metal grid suitable for use in the covering material; and
Figure 5 depicts a cross-section of the metal grid of Figure 4, embedded in the polyurethane-based layer.

### EMBODIMENTS

1. A reinforced covering material, comprising a reinforcement layer with apertures therein, and a polyurethane-based layer comprising 20 - 100 % of thermosetting polyurethane, based on the weight of that layer, which polyurethane-based layer is arranged at at least one side of the reinforcement layer and extends through the apertures.
2. The covering material according to embodiment 1, wherein said reinforcement layer comprises or consists of a deformable material, preferably a metal.
3. The covering material according to any one of the preceding embodiments, wherein said reinforcement layer is an expanded metal grid, preferably gauze-shaped.
4. The covering material according to embodiment 2 or 3, said metal comprising or consisting of aluminum.
5. The covering material according to any one of the preceding embodiments, wherein said polyurethane-based layer comprises 1 - 80 % of fillers and/or extenders , preferably comprising bituminous material(s), such as bitumen or polymer-modified bitumen.
6. The covering material according to any one of the preceding embodiments, wherein said polyurethane-based layer comprises a polyurethane foam, preferably a bitumen-containing polyurethane foam.
7. The covering material according to any one of the preceding embodiments, wherein said reinforcement layer at least at both sides is embedded at least up to its surface in the polyurethane-based layer.
8. A process for producing a reinforced covering material, comprising (i) providing a reinforcement having apertures on a closing substrate, (ii) impregnating said reinforcement with a liquid composition containing non-cross-linked polyurethane and/or containing polyurethane reactants, said composition filling the apertures of the reinforcement and curing to form a polyurethane-based layer on the reinforcement, (iii) leveling the layer.
9. The process according to embodiment 8, wherein said composition provided in step (ii) comprises polyol and diisocyanate.
10. The process according to embodiment 8 or 9, wherein step (ii) involves dispersing a gas into the composition containing polyurethane reactants, optionally further containing bituminous materials, with a temperature less than 120 °C, more preferably less than 50°C, and with a viscosity of 100 - 10.000 mPas measured at said temperature using EN 12596, wherein said gas is preferably tangentially brought into contact with a stream containing the polyurethane reactants, the contact time of said polyurethane reactants and said gas being less than 1 minute, preferably less than 10 seconds, to obtain a thermosetting polyurethane foam impregnating the reinforcement.
11. Use of the covering material according to any one of embodiments 1 - 7 or as obtained by the method according to any one of embodiments 8 - 10 for providing water- or weather-proofing.
12. Use according to embodiment 11, in roofs, bridges, tunnels, hydraulic systems, channels.
13. Use according to embodiment 11, as flashings, e.g. as a substitute for lead flashing.

### DETAILED DESCRIPTION OF THE INVENTION

In a first aspect, the invention pertains to a reinforced covering material for providing weather-or water-proofing, i.e. weather- or water-resistant covering material, particularly for transitions between different construction elements, more particularly for transitions between different parts in roofs, comprising a reinforcement, preferably a metal layer with apertures therein, and a polyurethane-based layer comprising 20 - 100 % of thermosetting polyurethane, based on the weight of that layer, which polyurethane-based layer is arranged at, at least, one side of the reinforcement layer and extends through the apertures.

Throughout the text, the terminology "polyurethane-based layer" is chosen to distinguish the polymeric layer from those elastomeric or thermoplastic polymer-based layers known in the art; it not necessarily means that the thermosetting polyurethane component is the predominant component present in the layer, as detailed below.

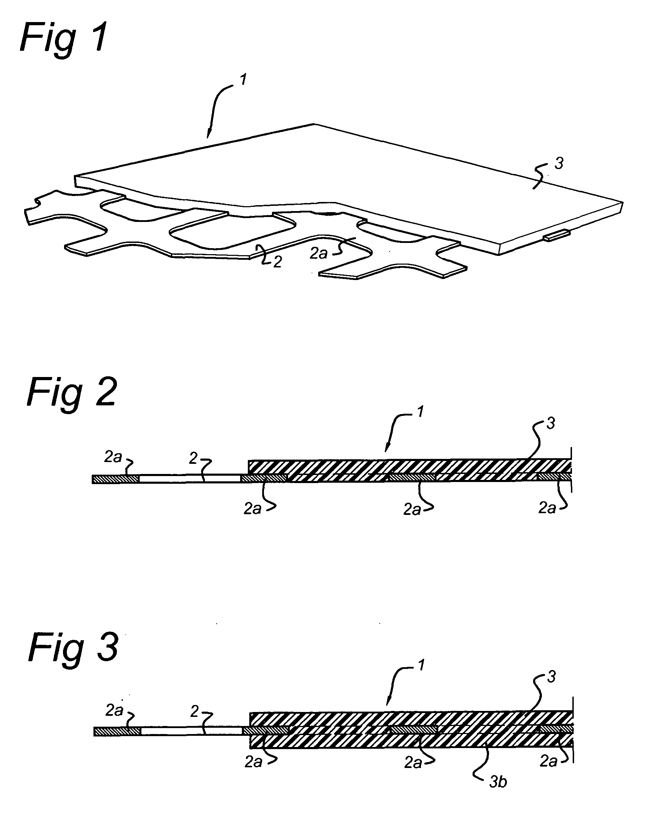

According to the invention, the covering material **1** which ensures both moldability into shape performance and the requisite rigidity comprises at least one reinforcement, preferably a metal layer, **2** arranged beneath a PUR-containing layer **3.** Said reinforcement suitably presents apertures **2a** in which the PUR-containing layer provided on top of the metal layer engages. The PUR-containing layer may extend though the apertures beyond the surface of the reinforcement, thus forming a layer at either side of the reinforcement, as depicted in Figures 3. This prevents damage or tearing off of the material and provides protection of the reinforcement against the elements.

The term "reinforcement *layer"* clarifies that the reinforcement forms a two-dimensional network substantially covered by the polyurethane-based layer; the terms "reinforcement" and "reinforcement layer" are used interchangeably. The reinforcement is employed to stabilize the covering material, to provide the strength required to span irregularities in its supporting surface and to distribute local strains over a greater dimension. To that purpose, the reinforcement can be a permanently deformable layer. In one embodiment, it comprises non-woven materials, such as glass fleece and/or fabric and/or polyester non-woven fabric or a combination of these, for instance mat-shaped. The reinforcement may comprise a mat made from metallic-wool, pressed to the desired thickness.

In one embodiment, the reinforcement may comprise a perforated sheet comprising or made of a material of metallic origin. The term "metal" incorporates metal alloys. Preferably, the reinforcement comprises or consist of a metal layer, preferably in the form of a metal grid, mesh, web or netting. The metal preferably comprises or consists of aluminum. Conventional aluminum is known to corrode easily, but if encapsulated by polyurethane it is thus corrosion-proof. The metal may have been submitted to a tempering or recrystallization treatment, so as to reduce the deformation tensions arising at the manufacture of the metal layer, whereby the metal layer is more readily deformed. The metal layer is preferably expanded or stretched to further enhance plastic deformability. Examples are given in NL 8902798 and WO-95/31620.

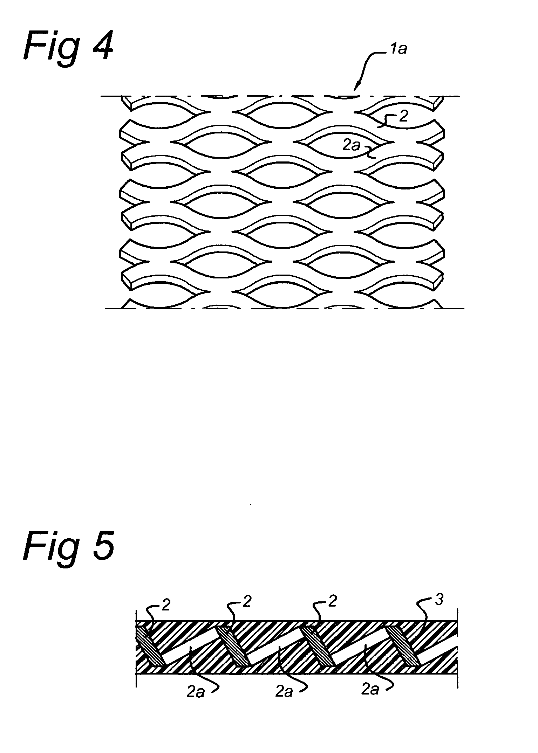

In one embodiment, the metal layer is gauze-shaped that is manufactured from a metal plate that is cut in at the location of the meshes to be formed (or slit perforated) and which is subsequently stretched for transforming the cut-ins into meshes bounded by metal strips, while having the metal strips tilt from and with respect to the main plane of the metal plate. It is preferred that at, at least, one, preferably at both of the main planes of metal planes of the metal gauze the edges of the tilted metal strips are flattened, in particular to form surfaces that are parallel to the main planes. A lower structure height of the covering material can thus be realized, and it is avoided that the PUR-based layer(s) are damaged by the edges. This embodiment is depicted in Figure 4. The structure thus provided to the reinforcement layer adds to the plastic deformability of the covering material.

The apertures or grid size must, nevertheless, be sufficiently large to get filled by the polyurethane. However, the viscosity of the polyurethane reactants is an important parameter therein as well. A typical reinforcement layer preferably has a thickness range of 0.2 - 2. 0 mm. A suitable metal grid typically has a mesh size of 0.5 - 2 mm and a rib width of preferably 0.5 - 2 mm. The thickness of the covering material per se, i.e. of the reinforcement layer and the one or more PUR-containing layers is preferably about 0.1 to 4 mm. The invention is however not considered limited to the exact dimensions of the reinforcement which are largely dependent on the application sought for.

The polyurethane applied in the present invention is a thermosetting polyurethane composition. Such cross-linkable polyurethane polymers are known in the art, for instance from US 4,543,276, US 6,861,491 and WO/2000/075213. The composition may be provided as a mixture of its building blocks, i.e. a polyol and diisocyanate, which during impregnation react and cure to the ultimate thermosetting polyurethane layer.

In a preferred embodiment, the polyurethane-based layer is essentially water-free, i.e. preferably containing at most 1 wt% water based on the weight of the layer, more preferably less than 0.5 wt%. The use of water in assembly is avoided since it typically yields very hard polyurea domains. This does not comply with the aim of the invention to provide polyurethanes and extended polyurethane layers with high resistance to impact at very low temperatures. The thermosetting polyurethane-based layer of the invention preferably exhibits a glass transition temperature (Tg) - as determined by dynamic mechanical thermal analyses (DMTA) or thermo-mechanical analysis (TMA) - of lower than - 50 °C, preferably -60°C. This is an indication of the elastic (not-brittle) behavior of the polyurethane-based layer at extremely low temperatures.

The thermosetting composition may contain suitable solvents or diluents, as well as suitable additives such as pigments, plasticizers, stabilizers, extenders etc.. The polyurethane-based layer preferably comprises up to 99 %, more preferably 30 - 90 %, most preferably 40 - 80 %, especially up to 70 % of said thermosetting polyurethane, based on weight content of layer **3.** These numbers also account for any amounts of unreacted ingredients and catalyst remaining. It is preferred that these reactants form at most 1 wt% of the polyurethane content. The polyurethane preferably forms a continuous phase in the layer. Considering the size of the apertures, it is considered within the skilled person's experimentation skills to adjust the viscosity of the reacting polyurethane building blocks to allow for a proper penetration of the reinforcement and/or its apertures. The ratio of polyol and diisocyanate is an important parameter therein.

In one embodiment, part of the polyurethane-based layer may be comprised from fillers and extenders, such as talcum, resins and/or bituminous compounds conventionally applied in roofing. The layer may comprise up to 80 %, preferably 1 - 80 %, more preferably 10 - 70 wt%, most preferably 20 - 60 wt% of fillers (e.g. silica, basalt, slate dust, bitumen). The amount of fillers preferably adds up to 30 %, based on the weight of layer **3.** In one embodiment, the sum of polyurethane (and its reactants and catalysts) and fillers accounts for 100 % of the layer.

The extender(s) preferably comprise(s) bituminous materials. Bitumen is a relatively cheap material that is easily liquefied, and is durable, able to tightly adhere to the reinforcement and can be integrated in the polyurethane-based layer in a continuous (casting) process. Bituminous compounds or bitumen can be easily blended into one or both reactants of the polyurethane system. It has also been found that some resins which are in use in the asphalt industry, also called "colorless bitumen", could fulfill the same function as described before. These are comprised in the term "bituminous materials". Bituminous materials also comprises polymer-modified bitumen.

In a preferred embodiment, the covering material comprises a polyurethane foam, preferably a bitumen-containing polyurethane foam obtainable or obtained by dispersing a gas in the aforementioned polyurethane reactants, optionally further containing bituminous materials, with a temperature less than 120 °C, more preferably less than 50°C, and with a viscosity of 100 - 10.000 mPas measured at said temperature using EN 12596, wherein said gas is preferably tangentially brought into contact with a stream containing the polyurethane reactants, the contact time of said polyurethane reactants and said gas being less than 1 minute, preferably less than 10 seconds, to obtain a thermosetting polyurethane foam that is not dehydrogenated, oxidised or otherwise chemically modified, and in which at least 10 vol% gas is distributed substantially homogeneously. A suitable foam is described in WO2008/023982.

Preferably the bituminous compound is blended into the polyol component of the polyurethane system. To promote mixing of the ingredients it may require surface-active agents. The type and relative amount of this component are known to the skilled person. Stability of at least 6 months is within reach.

However, in another embodiment, a covering material is provided in accordance with the present invention that is free from any bituminous materials.

In one embodiment, the polyurethane-based layer may be provided with colorants (dyes or pigments) to provide an aesthetic effect throughout the covering material.

According to the invention the upper and/or lower face of the covering material of the present invention may remain uncoated or be coated with UV-resistant, fire-resistant and/or color-providing materials, e.g. in form of granules, a film or foil so as to obtain an excellent and effective ultraviolet light and fire protection of the cover material as well as an aesthetic appearance.

Dependent on the application, the covering material may be shaped, such as to form shingles or other building members, or deformable flashing sections.

The invention also pertains to a process for producing the reinforced covering material, comprising (i) providing a reinforcement having apertures on a closing substrate, (ii) impregnating said reinforcement with a liquid composition containing non-cross-linked polyurethane and/or containing polyurethane reactants, said composition filling the apertures of the reinforcement and curing to form a polyurethane-based layer on the reinforcement, (iii) leveling the layer. The mixture of polyurethane reactants is conveniently referred to as polyurethane mixture. The amounts of polyurethane or polyurethane reactants (building blocks) selected to achieve a polyurethane-based layer having a polyurethane content within the aforementioned ranges onto the reinforcement. Although not preferred, additional curing agents may be added to the composition.

In a preferred embodiment the process involves mixing polyol and diisocyanate reactants, or equivalents, immediately prior to bringing said mixture into contact with the reinforcement. While impregnating, the polyurethane forms and subsequently hardens. The hardening takes places automatically since the urethane reaction is exothermic. In this way the covering material according to the invention can easily and reliably be manufactured, controlling the viscosity and maintaining the temperatures conveniently low, preferably in the range of 10 - 50 °C. The viscosity and reaction rate may be controlled by adjusting the relative contributions of the polyol and diisocyanate. A tight connection between the reinforcement and the polyurethane is thus realized.

In a further preferred embodiment, the method results in the assembly of a polyurethane foam-based covering material, preferably a bitumen-containing polyurethane-forming foam-based covering material, wherein step (ii) involves dispersing a gas in the aforementioned composition containing polyurethane reactants, optionally further containing bituminous materials, with a temperature less than 120 °C, more preferably less than 50°C, and with a viscosity of 100 - 10.000 mPas measured at said temperature using EN 12596, wherein said gas is preferably tangentially brought into contact with a stream containing the polyurethane reactants, the contact time of said polyurethane reactants and said gas being less than 1 minute, preferably less than 10 seconds, to obtain a thermosetting polyurethane foam impregnating the reinforcement. The foam is not dehydrogenated, oxidised or otherwise chemically modified, and contains at least 10 vol% gas distributed substantially homogeneously. A suitable foam is described in WO2008/023982.

Additional foils of layers may be arranged on top of the polyurethane-containing layer at any stage of the assembly.

When being manufactured the reinforcement can advantageously be placed on a transport surface. Thus when casting the polyurethane a mould bottom is provided. The transport surface may be provided with a non-adhesive layer, for instance a suitable foil e.g. Teflon, in order to prevent undesirable adhesion to the mould bottom, and/or transport surface.

Any of the aforementioned additional ingredients, such as fillers and/or extenders, may be mixed in with the composition applied to the reinforcement in step (ii) of the process.

The covering material according to the invention may be applied for providing weather-proofing or water-proofing where desired, particularly for transitions between different bituminous construction elements such as bridges, tunnels and/or in roofs, as a covering layer thereon, particularly used for flashing roof lead-ins or "lead flashing", for use on and in chimneys, skylights, air ducts, attics and the like. The covering material protects the deck and the interior of the structure which upper surface it covers from the weather, including UV radiation, wind, rain and other precipitation.

### EXAMPLES

### Example 1

A metal grid with a metal base like aluminum was placed on a slowly rotating belt, protected by a release foil. A quantity of approx. 2-3 kg per m² of a composition containing polyurethane components ( 78 parts polyol, 22 parts diisocyanate) was applied at 30 °C and transversely distributed. On top of this reacting polyurethane composition, a metal grid (mesh size ) was introduced in such a way that the liquid polyurethane composition had the ability to penetrate through the holes of the mesh, before the onset of the chemical reaction. The reaction time (to the expert: the tack-free time) was arranged such that the polyurethane reaction had been almost completed at the time that the impregnated grid left the belt. As a guide, in the present case it took about 60 seconds.

### Example 2

Example 1 was repeated, but the composition applied to the metal grid was prepared from a mixture of 40 kg of the polyurethane reactants and 60 kg bitumen. Thorough mixing of otherwise incompatible polyurethane mixture and bitumen was achieved using suitable blending equipment which is known to the skilled person.

### Example 3

Example 1 was repeated, where the composition applied to the metal grid was obtained by mixing 50 kg of the polyurethane mixture with 50 kg talcum prior to contacting it with the grid.

### Example 4

Example 1 was repeated by mixing the polyurethane mixture and a resinous compound, also called "colorless bitumen". The mixing ratio was 40 bitumen/ 60 polyurethane reactants, and to 60 kg of the polyurethane mixture 2 kg colorants was added, to obtain a reinforced covering layer having an aesthetic appearance.

## Claims

1. A reinforced covering material, comprising a reinforcement layer with apertures therein, and a polyurethane-based layer comprising 20 - 100 % of thermosetting polyurethane, based on the weight of that layer, which polyurethane-based layer is arranged at at least one side of the reinforcement layer and extends through the apertures.

2. The covering material according to claim 1, wherein said reinforcement layer comprises or consists of a deformable material, preferably a metal.

3. The covering material according to any one of the preceding claims, wherein said reinforcement layer is an expanded metal grid, preferably gauze-shaped.

4. The covering material according to claim 2 or 3, said metal comprising or consisting of aluminum.

5. The covering material according to any one of the preceding claims, wherein said polyurethane-based layer comprises 1 - 80 % of fillers and/or extenders, preferably comprising bituminous material(s) such as bitumen and/or polymer-modified bitumen.

6. The covering material according to any one of the preceding claims, wherein said polyurethane-based layer comprises a polyurethane foam, preferably a bitumen-containing polyurethane foam.

7. The covering material according to any one of the preceding claims, wherein said reinforcement layer at least at both sides is embedded at least up to its surface in the polyurethane-based layer.

8. A process for producing a reinforced covering material, comprising (i) providing a reinforcement having apertures on a closing substrate, (ii) impregnating said reinforcement with a liquid composition containing non-cross-linked polyurethane and/or containing polyurethane reactants, said composition filling the apertures of the reinforcement and curing to form a polyurethane-based layer on the reinforcement, (iii) leveling the layer.

9. The process according to claim 8, wherein said composition provided in step (ii) comprises polyol and diisocyanate.

10. The process according to claim 8 or 9, wherein step (ii) involves dispersing a gas into the composition containing polyurethane reactants, optionally further containing bituminous materials, with a temperature less than 120 °C, more preferably less than 50°C, and with a viscosity of 100 - 10.000 mPas measured at said temperature using EN 12596, wherein said gas is preferably tangentially brought into contact with a stream containing the polyurethane reactants, the contact time of said polyurethane reactants and said gas being less than 1 minute, preferably less than 10 seconds, to obtain a thermosetting polyurethane foam impregnating the reinforcement.

11. Use of the covering material according to any one of claims 1 - 7 or as obtained by the method according to any one of claims 8 - 10 for providing water- or weather-proofing.

12. Use according to claim 11, in roofs, bridges, tunnels, hydraulic systems, channels.

13. Use according to claim 11, as flashings e.g. as a substitute for lead flashing.

## Patentansprüche

1. Ein verstärktes Abdeckmaterial, umfassend eine Verstärkungsschicht mit Öffnungen darin und eine Schicht auf Polyurethanbasis, welche 20 - 100 % wärmehärtbaren Polyurethans, bezogen auf das Gewicht dieser Schicht, umfasst, wobei die Schicht auf Polyurethanbasis mindestens auf einer Seite der Verstärkungsschicht angeordnet ist und sich durch die Öffnungen erstreckt.

2. Das Abdeckmaterial nach Anspruch 1, wobei die Verstärkungsschicht ein verformbares Material, vorzugsweise ein Metall, umfasst oder aus einem besteht.

3. Das Abdeckmaterial nach einem der vorstehenden Ansprüche, wobei die Verstärkungsschicht ein Streckmetallgitter, vorzugsweise gazeförmig, ist.

4. Das Abdeckmaterial nach Anspruch 2 oder 3, wobei das Metall Aluminium umfasst oder aus Aluminium besteht.

5. Das Abdeckmaterial nach einem der vorstehenden Ansprüche, wobei die Schicht auf Polyurethanbasis 1 - 80 % Füllstoffe und/oder Streckmittel umfasst, die vorzugsweise bituminöse(s) Material(ien) wie Bitumen und/oder polymermodifiziertes Bitumen umfassen.

6. Das Abdeckmaterial nach einem der vorstehenden Ansprüche, wobei die Schicht auf Polyurethanbasis einen Polyurethanschaum, vorzugsweise einen bitumenhaltigen Polyurethanschaum, umfasst.

7. Das Abdeckmaterial nach einem der vorstehenden Ansprüche, wobei die Verstärkungsschicht mindestens auf beiden Seiten mindestens bis zu seiner Oberfläche in die Schicht auf Polyurethanbasis eingebettet ist.

8. Ein Verfahren zur Herstellung eines verstärkten Abdeckmaterials, umfassend (i) Bereitstellen einer Verstärkung mit Öffnungen auf einem abschließenden Trägermaterial, (ii) Imprägnieren der Verstärkung mit einer flüssigen Zusammensetzung, enthaltend unvernetztes Polyurethan und/oder enthaltend Polyurethanreaktanten, wobei die Zusammensetzung die Öffnungen der Verstärkung ausfüllt, und Härten, um eine Schicht auf Polyurethanbasis auf der Verstärkung zu bilden, (iii) Einebnen der Schicht.

9. Das Verfahren nach Anspruch 8, wobei die in Schritt (ii) bereitgestellte Zusammensetzung Polyol und Diisocyanat umfasst.

10. Das Verfahren nach Anspruch 8 oder 9, wobei Schritt (ii) Dispergieren eines Gases in die Zusammensetzung, welche Polyurethanreaktanten enthält, welche gegebenenfalls ferner bituminöse Materialien enthält, bei einer Temperatur von weniger als 120°C, stärker bevorzugt weniger als 50°C, und bei einer Viskosität von 100 - 10.000 mPas, gemessen bei dieser Temperatur nach EN 12596, einschließt, wobei das Gas vorzugsweise tangential mit einem Strom, welcher die Polyurethanreaktanten enthält, in Kontakt gebracht wird, wobei die Kontaktzeit der Polyurethanreaktanten und des Gases weniger als 1 Minute, vorzugsweise weniger als 10 Sekunden beträgt, um einen wärmehärtbaren Polyurethanschaum zu erhalten, welcher die Verstärkung imprägniert.

11. Verwendung des Abdeckmaterials nach einem der Ansprüche 1 - 7 oder wie nach dem Verfahren nach einem der Ansprüche 8 - 10 erhalten zur Bereitstellung einer Abdichtung gegenüber Wasser und Witterung.

12. Verwendung nach Anspruch 11 in Dächern, Brücken, Tunneln, hydraulischen Systemen, Kanälen.

13. Verwendung nach Anspruch 11 als Abdeckbleche, z.B. als ein Ersatz für ein Bleiabdeckblech.

## Revendications

1. Matériau de revêtement renforcé comprenant une couche de renfort dans laquelle sont percées des ouvertures et une couche à base de polyuréthane renfermant 20-100 % de polyuréthane thermodurcissable par rapport au poids de cette couche, cette couche à base de polyuréthane étant réalisée sur au moins une face de la couche de renfort et s'étendant au travers des ouvertures.

2. Matériau de revêtement conforme à la revendication 1, dans lequel la couche de renfort comprend ou consiste en un matériau déformable, de préférence un métal.

3. Matériau de revêtement conforme à l'une quelconque des revendications précédentes, dans lequel la couche de renfort est une grille de métal déployé de préférence, en forme de toile métallique.

4. Matériau de revêtement conforme à la revendication 2 ou 3, dans lequel le métal renferme ou consiste en de l'aluminium.

5. Matériau de revêtement conforme à l'une quelconque des revendications précédentes, dans lequel la couche à base de polyuréthane renferme 1-80 % de charges et/ou d'éléments de garnissage renfermant de préférence un ou plusieurs matériau(x) bitumineux tels que des bitumes et/ou des bitumes modifiés par des polymères.

6. Matériau de revêtement conforme à l'une quelconque des revendications précédentes, dans lequel la couche à base de polyuréthane renferme une mousse de polyuréthane de préférence une mousse de polyuréthane renfermant du bitume.

7. Matériau de revêtement conforme à l'une quelconque des revendications précédentes, dans lequel la couche de renfort est noyée au moins sur ses deux faces jusqu'à sa surface, dans la couche à base de polyuréthane.

8. Procédé d'obtention d'un matériau de revêtement renforcé comprenant les étapes consistant à :
(i) se procurer un renfort ayant des ouvertures sur un substrat de fermeture,
(ii) imprégner ce renfort avec une composition liquide renfermant du polyuréthane non réticulé et/ou renfermant des réactifs pour polyuréthane, cette composition remplissant les ouvertures du renfort, et effectuer la réticulation pour former une couche à base de polyuréthane sur le renfort,
(iii) niveler la couche.

9. Procédé conforme à la revendication 8, selon lequel la composition de l'étape (ii) renferme du polyol et du di-iso-cyanate.

10. Procédé conforme à la revendication 8 ou 9, selon lequel l'étape (ii) implique une étape consistant à disperser un gaz dans la composition renfermant des réactifs pour polyuréthane et renfermant en outre le cas échéant des matériaux bitumineux, à une température inférieure à 120°C, de façon plus préférentielle inférieure à 50°C et ayant une viscosité de 100-10.000 mPas mesurée à cette température conformément à EN 12596, ce gaz étant de préférence mis en contact tangentiellement avec un flux renfermant les réactifs pour polyuréthane, la durée de contact des réactifs pour polyuréthane et du gaz étant inférieure à 1 minute, de préférence inférieure à 10 secondes, pour obtenir une mousse de polyuréthane thermodurcissable imprégnant le renfort.

11. Utilisation du matériau de revêtement conforme à l'une quelconque des revendications 1-7 ou obtenue par la mise en oeuvre du procédé conforme à l'une quelconque des revendications 8-10 pour obtenir une imperméabilisation vis-à-vis de l'eau ou des intempéries.

12. Utilisation conforme à la revendication 11, dans des toitures, des ponts, des tunnels, des systèmes hydrauliques, des canaux.

13. Utilisation conforme à la revendication 11, en tant que noquets, c'est-à-dire en tant que substituts de noquets en plomb.
